# EUROPEAN PATENT APPLICATION

(11) **EP 4 228 071 A1**
(43) Date of publication of application: **16.08.2023**
(21) Application number: 22184023.4
(22) Date of filing: 11.07.2022
(51) Int. Cl.: H01M 50/342, H01M 50/367, H01M 50/358, H01M 50/289, H01M 50/209, H01M 50/103

(54) **BATTERY CONTAINER AND BATTERY PACK**

(30) Priority: 10.02.2022 CN 202210124044
(71) Applicant: CALB Co., Ltd., Changzhou City, Jiangsu Province (CN)
(72) Inventor: WANG, Shuaifeng, Changzhou City, Jiangsu Province (CN); SUN, Guohua, Changzhou City, Jiangsu Province (CN); WAN, Zhengkun, Changzhou City, Jiangsu Province (CN); REN, Jiaojiao, Changzhou City, Jiangsu Province (CN); YANG, Xulong, Changzhou City, Jiangsu Province (CN)
(74) Representative: Becker, Eberhard

(57) **Abstract**

A battery container includes a container body (10) and a partition structure (20). The partition structure (20) is arranged in the container body (10) to form a battery accommodating space (11) and an exhaust space (12). The partition structure (20) includes a mounting plate (21) and a pressure relief structure (22). The pressure relief structure (22) and the mounting plate (21) are independently formed structures. The pressure relief structure (22) is arranged on the mounting plate. The air in the battery accommodating space (11) is able to be collected into the exhaust space (12) through the pressure relief structure (22) and discharged. A battery pack includes the battery container.

## Description

### BACKGROUND

### Technical Field

The present disclosure relates to the technical field of batteries, in particular to a battery container and a battery pack.

### Description of Related Art

In the conventional technology, the inner space of the battery pack may include an accommodating space for accommodating batteries and an exhaust space for exhausting air. A pressure relief structure is arranged between the accommodating space and the exhaust space, so as to avoid the thermal runaway problem from occurring in the battery pack. However, due to structural limitation of the pressure relief structure, damage might occur during the assembly process, and the pressure relief effect will be affected.

### SUMMARY

The disclosure provides a battery container and a battery pack.

According to a first aspect of the present disclosure, a battery container is provided. The battery container includes a container body and a partition structure. The partition structure is arranged in the container body to form a battery accommodating space and an exhaust space. The partition structure includes a mounting plate and a pressure relief structure. The pressure relief structure and the mounting plate are independently formed structures, and the pressure relief structure is arranged on the mounting plate. An air in the battery accommodating space may be collected into the exhaust space through the pressure relief structure and discharged.

According to a second aspect of the present disclosure, a battery pack including the above battery container is provided.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural view of a battery pack according to an exemplary embodiment.
FIG. 2 is a schematic partial structure view of a battery pack according to an exemplary embodiment.
FIG. 3 is a schematic structural view of a battery container according to an exemplary embodiment.
FIG. 4 is a schematic structural view of a battery accommodating space of a battery container according to an exemplary embodiment.
FIG. 5 is a schematic structural view of an exhaust space of a battery container according to an exemplary embodiment.
FIG. 6 is a schematic structural view of a battery according to an exemplary embodiment.
FIG. 7 is a schematic partial structural view of a battery pack according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

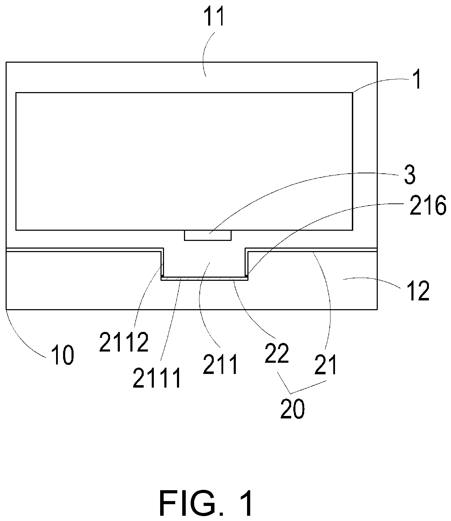

Please refer to FIG. 1 to FIG. 5, an embodiment of the present disclosure provides a battery container. The battery container includes a container body 10 and a partition structure 20. The partition structure 20 is arranged in the container body 10 to form a battery accommodating space 11 and an exhaust space 12. The partition structure 20 includes a mounting plate 21, and a pressure relief structure 22. The pressure relief structure 22 and the mounting plate 21 are independently formed structures, and the pressure relief structure 22 is arranged on the mounting plate 21. The air in the battery accommodating space 11 may be collected into the exhaust space 12 through the pressure relief structure 22 and discharged.

In an embodiment of the present disclosure, the battery container includes a container body 10 and a partition structure 20, and the partition structure 20 forms form a battery accommodating space 11 and an exhaust space 12 in the container body 10. The partition structure 20 includes a mounting plate 21 and a pressure relief structure 22. The air in the battery accommodating space 11 may be collected into the exhaust space 12 through the pressure relief structure 22 and discharged, so as to realize the pressure relief function for the battery container and avoid safety problems. Since the pressure relief structure 22 and the mounting plate 21 are independently formed structures, the configuration of the pressure relief structure 22 may be controlled, thereby reducing the risk of damage to the pressure relief structure 22, thus ensuring the pressure relief effect.

It should be noted that, the pressure relief structure 22 and the mounting plate 21 are independently formed structures, that is, the mounting plate 21 and the pressure relief structure 22 need to be independently formed before the pressure relief structure 22 is configured on the mounting plate 21. When the mounting plate 21 is configured and transported, the pressure relief structure 22 may not be configured in the beginning, so as to avoid damage to the pressure relief structure 22 and other problems caused by various unnecessary operations, thereby ensuring the pressure relief performance of the pressure relief structure 22. For the battery container in this embodiment, the pressure relief structure 22 may be configured when the batteries are grouped. In addition, since the pressure relief structure 22 and the mounting plate 21 are formed independently, the manufacturing difficulty of the mounting plate 21 may be reduced, and the forming efficiency of the components may be improved to a certain extent.

The pressure relief structure 22 may be a valve body, and when the pressure in the battery accommodating space 11 reaches a certain level, the valve body may be opened so that the battery accommodating space 11 and the exhaust space 12 are in communication. The pressure relief structure 22 may be similar to an explosion-proof structure, such as an explosion-proof valve. When the pressure in the battery accommodating space 11 reaches a certain level, the explosion-proof structure may be broken through by the pressure, so that the battery accommodating space 11 and the exhaust space 12 are in communication. The pressure relief structure 22 may also be a structure with relatively low strength, such as a thin aluminum plate. When the pressure in the battery accommodating space 11 reaches a certain level, the thin aluminum plate may be broken through by the pressure, so that the battery accommodating space 11 and the exhaust space 12 are in communication. The pressure relief structure 22 may also be a nick, as long as the implementation strength is relatively low. It should be noted that when the pressure in the battery accommodating space 11 reaches a certain level, it does not necessarily mean that the overall air pressure in the battery accommodating space 11 reaches a certain level, but may also mean that a part of air pressure in the battery accommodating space 11 reaches a certain level. For example, the pressure relief port of the battery is directly opposite to the pressure relief structure 22. Under the circumstances, a part of air pressure discharged from the pressure relief port of the battery will be relatively high, so the air pressure might directly exceed to a certain level and is collected into the exhaust space 12 and discharged. Under the circumstances, the air pressure at other parts of the battery accommodating space 11 may also have minor changes. In some embodiments, it is not excluded that the air pressure at other parts of the battery accommodating space 11 does not change. In this embodiment, the air pressure in the battery accommodating space 11 reaches a certain level, which emphasizes that the pressure relief structure 22 may be broken through by the air pressure.

In an embodiment, the air in the battery accommodating space 11 may break through the pressure relief structure 22, so that the air is collected into the exhaust space 12 and discharged. The breakage of the pressure relief structure 22 may be considered as the breakage in the middle part of the pressure relief structure 22, so as to realize the discharge of air. For example, the pressure relief structure 22 may be an explosion-proof film, and the explosion-proof film is provided with a thinned part. The air in the battery accommodating space 11 may break through the thinned part, so that the air is collected into the exhaust space 12 and discharged.

In an embodiment, the air in the battery accommodating space 11 may allow at least part of the pressure relief structure 22 to detach from the mounting plate 21 from a connection between the pressure relief structure 22 and the mounting plate 21, such that the air is collected into the exhaust space 12 and discharged. That is, the pressure relief structure 22 is not damaged; instead, the pressure relief structure 22 is disabled at its connection with the mounting plate 21, so that the air in the battery accommodating space 11 may be collected into the exhaust space 12 and discharged.

It should be noted that, the pressure relief structure 22 may be detached from the mounting plate 21 as a whole, or the pressure relief structure 22 may be partially detached from the mounting plate 21. Under the circumstances, a gap may be formed between the pressure relief structure 22 and the mounting plate 21, so as to realize the discharge of air. This embodiment emphasizes the failure at the connection between the pressure relief structure 22 and the mounting plate 21, rather than that the pressure relief is implemented through the breakage of the pressure relief structure 22 itself.

In an embodiment, the pressure relief structure 22 may be detached from the mounting plate 21 at a preset temperature. The preset temperature is a, which satisfies 100°C≤a≤300°C, so that the air generated by thermal runaway is discharged from the disabled part to the exhaust space 12.

In some embodiments, the preset temperature a may be 100°C, 110°C, 120°C, 150°C, 200°C, 210°C, 220°C, 250°C, 270°C, 280°C, 290°C, 300°C, etc.

It should be noted that the connection between the pressure relief structure 22 and the mounting plate 21 may be disabled at the preset temperature a, so that the air may be discharged in the early stage of thermal runaway and the safety performance of the battery pack may be improved. Alternatively, the pressure relief structure 22 may include a first part and a second part, the first part and the second part are connected, and the connection between the first part and the second part may be disabled at the preset temperature a, similar to the structure of the pressure relief structure 22 itself being damaged.

In an embodiment, the pressure relief structure 22 and the mounting plate 21 are connected through a first solder 216, that is, the pressure relief structure 22 and the mounting plate 21 are soldered, and the melting point of the first solder 216 may be 100°C to 300°C, so that the first solder 216 may be broken through and disabled at 100°C to 300°C, so as to ensure reliable heat dissipation and pressure relief.

The first solder 216 may be a tin-containing solder.

In an embodiment, the pressure relief structure 22 is adhered to the mounting plate 21, that is, the pressure relief structure 22 and the mounting plate 21 may be connected through an adhesive layer, and the adhesive layer may be broken through and disabled at 100°C to 300°C, so as to ensure reliable heat dissipation and pressure relief.

The adhesive layer may be adhesive, the adhesive may be polyurethane, epoxy, acrylic, and the adhesive may be melted at 100°C to 300°C.

In an embodiment, the pressure relief structure 22 may be an aluminum plate, a copper plate, a nickel plate, or the like. The pressure relief structure 22 may be broken through under the impact of a certain pressure, so that the battery accommodating space 11 and the exhaust space 12 communicate with each other. Alternatively, the connection between the pressure relief structure 22 and the mounting plate 21 is disabled at a preset temperature, so that the battery accommodating space 11 and the exhaust space 12 communicate with each other.

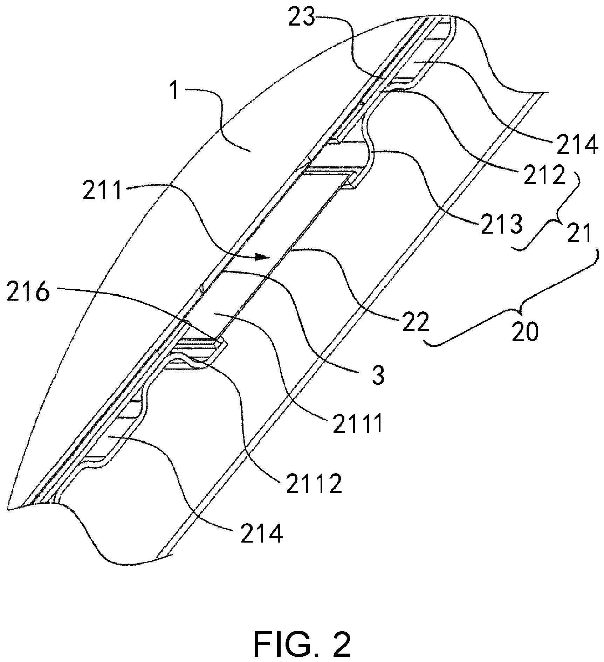

In an embodiment, as shown in FIG. 1 and FIG. 2, the pressure relief structure 22 is located on one side of the mounting plate 21 adjacent to the battery accommodating space 11, so that the heat in the battery accommodating space 11 can quickly reach the connection between the pressure relief structure 22 and the mounting plate 21, so as to realize the discharge of air.

It should be noted that, in the early stage of thermal runaway, the air may melt the connection between the pressure relief structure 22 and the mounting plate 21 to realize air leakage, and the pressure that subsequently contacts the pressure relief structure 22 may be relatively high so as to break through the pressure relief structure 22, or directly flush the pressure relief structure 22 into the exhaust space 12. Certainly, in some embodiments, if the air can melt the connection between the pressure relief structure 22 and the mounting plate 21 in the early stage of thermal runaway, so as to realize air leakage, the heat might decrease subsequently and will not break through the pressure relief structure 22; instead, the pressure relief structure 22 and the mounting plate 21 achieve the connection for a second time.

In an embodiment, the pressure relief structure 22 is located on the other side of the mounting plate 21 adjacent to the exhaust space 12, so that after the connection between the pressure relief structure 22 and the mounting plate 21 is disabled, the pressure relief structure 22 might be further detached from the mounting plate 21 due to its own gravity, thereby increasing the pressure relief ability.

In an embodiment, as shown in FIG. 1 and FIG. 2, the mounting plate 21 and the pressure relief structure 22 are formed with an air collecting groove 211. The air in the battery accommodating space 11 may be collected into the exhaust space 12 through the air collecting groove 211 and discharged. Since the configuration of the air collecting groove 211 allows the air to be quickly collected in the air collecting groove 211, the pressure relief ability of the pressure relief structure 22 may be improved.

It should be noted that the air collecting groove 211 may collect the air discharged from the battery, so as to ensure the pressure relief ability of the pressure relief structure 22. For example, the pressure relief structure 22 may be broken through under the impact of a certain pressure. Under the circumstances, the presence of the air collecting groove 211 may ensure the internal pressure of the air collecting groove 211. Alternatively, the connection between the pressure relief structure 22 and the mounting plate 21 is disabled at a preset temperature, and the air collecting groove 211 may fully collect the heat to ensure that the heat is discharged in time.

In some embodiments, as shown in FIG. 1 and FIG. 2, the air collecting groove 211 includes a bottom wall 2111 and a lateral wall 2112, and the pressure relief structure 22 may form the lateral wall 2112 of the air collecting groove 211.

In some embodiments, the pressure relief structure 22 forms at least a part of the bottom wall 2111 of the air collecting groove 211. Such design not only facilitates the configuration of the pressure relief structure 22, but also ensures that the pressure relief structure 22 may be reliably detached from the mounting plate 21.

In some embodiments, the air collecting groove 211 may be a through groove, that is, the air collecting groove 211 includes three openings. Under the circumstances, the two opposite sides of the bottom wall 2111 of the air collecting groove 211 are provided with the lateral wall 2112. For example, the air collecting groove 211 is arranged on a panel. Under the circumstances, a recess may be formed on the panel, and both ends of the recess pass through two opposite ends of the panel. Alternatively, the air collecting groove 211 may be a concave, that is, the air collecting groove 211 includes an opening, and the bottom wall 2111 of the air collecting groove 211 surrounds a circumferentially closed lateral wall 2112. For example, the air collecting groove 211 is arranged on a panel. Under the circumstances, a concave may be provided inside the panel.

In some embodiments, the upper and lower sides of the mounting plate 21 form the battery accommodating space 11 and the exhaust space 12. As shown in FIG. 1, the battery accommodating space 11 and the exhaust space 12 are stacked in an up-down direction. In some embodiments, it is not excluded that the upper and lower sides of the mounting plate 21 form the exhaust space 12 and the battery accommodating space 11.

In some embodiments, the battery accommodating space 11 and the exhaust space 12 are formed on the left and right sides of the mounting plate 21. Under the circumstances, the exhaust space 12 may be arranged around the circumference of the battery accommodating space 11, that is, the exhaust space 12 is provided around the battery accommodating space 11. Alternatively, the exhaust space 12 may be only a part of the circumference of the battery accommodating space 11. For example, the battery accommodating space 11 may be a rectangular space, and in this case, the exhaust space 12 may be located on at least one side of the four circumferential outer sides of the rectangular space. Therefore, the air in the battery accommodating space 11 may enter the exhaust space 12 from the lateral side thereof, so as to realize pressure relief through the exhaust space 12.

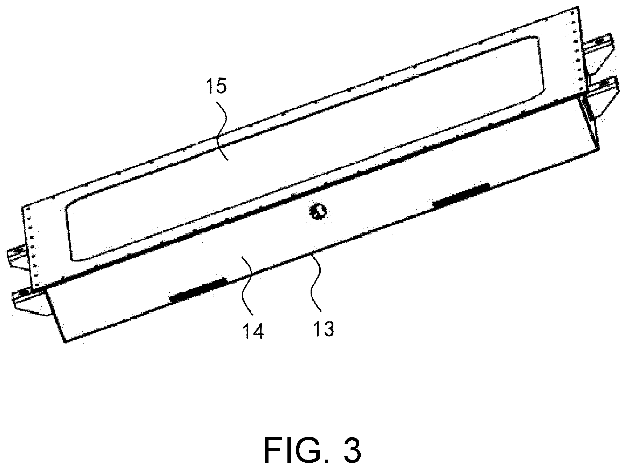

In an embodiment, as shown in FIG. 3 to FIG. 5, the container body 10 further includes a bottom plate 13 and a frame 14. The frame 14 is arranged around the bottom plate 13. The partition structure 20 is disposed in the frame 14 to form the battery accommodating space 11 and the exhaust space 12 on the upper and lower sides of the partition structure 20, respectively.

It should be noted that the arrangement of the frame 14 around the bottom plate 13 does not mean a specific configuration, and the emphasis is to explain that the frame 14 forms a circumferentially closed space. The frame 14 is connected with the bottom plate 13, and the frame 14 may be arranged on the bottom plate 13, or the frame 14 may be connected with the peripheral edge of the bottom plate 13. It is not limited here that a top cover 15 is connected to the frame 14 and arranged opposite to the partition structure 20, so that the container body 10 may form a closed space.

The bottom plate 13 and the frame 14 form a large cavity, and the partition structure 20 may divide the large cavity into upper and lower parts, that is, the battery accommodating space 11 and the exhaust space 12. The bottom plate 13 may be configured to protect the bottom portion of the battery container, and the specific structure of the bottom plate 13 is not limited in the disclosure. The frame 14 is connected to the bottom plate 13, and the frame 14 may be formed by splicing a plurality of beams, or the frame 14 may also be an integral plate-like structure enclosing as a circumferentially closed space.

At least one of the bottom plate 13 and the frame 14 is provided with an exhaust through hole, so that the air in the exhaust space 12 can be discharged in time. The inside of the exhaust through hole may not be provided with other structures, and in this case, the exhaust space 12 may be directly connected to the outside through the exhaust through hole.

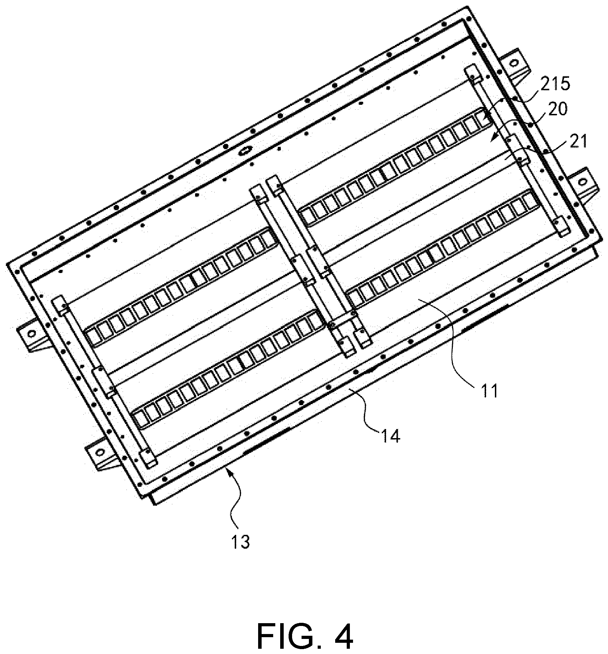

In an embodiment, as shown in FIG. 4, the mounting plate 21 may include a weakening part 215, and the air the battery accommodating space 11 may be collected to the exhaust space 12 through the weakening part 215 and the pressure relief structure 22. The weakening part 215 may be a through hole. As shown in FIG. 4, the air in the battery accommodating space 11 may pass through the through hole to reach the pressure relief structure 22. Alternatively, the weakening part 215 may be a valve body, and when the pressure in the battery accommodating space 11 reaches a certain level, the valve body may be opened, so that the air in the battery accommodating space 11 may pass through the valve body to reach the pressure relief structure 22. The weakening part 215 may be similar to an explosion-proof structure, such as an explosion-proof valve. When the pressure in the battery accommodating space 11 reaches a certain level, the pressure may break through the explosion-proof structure, and the air in the battery accommodating space 11 may pass through the explosion-proof structure to reach the pressure relief structure 22. The specific structure of the weakening part 215 is not limited in the disclosure.

In an embodiment, as shown in FIG. 2, the mounting plate 21 includes a first plate 212 and a second plate 213. The second plate 213 and the first plate 212 are arranged opposite to each other. The pressure relief structure 22 is arranged on the second plate 213. The second plate 213 and the pressure relief structure 22 form the air collecting groove 211, and the air in the battery accommodating space 11 may be collected into the air collecting groove 211, thereby ensuring that the air in the battery accommodating space 11 may be collected into the exhaust space 12 through the pressure relief structure 22 and discharged. The arrangement of the second plate 213 and the first plate 212 may increase the structural strength of the mounting plate 21 so as to reliably support the battery.

The air in the battery accommodating space 11 may be collected into the air collecting groove 211 through the first plate 212. The first plate 212 may be provided with the weakening part 215 thereon, and the weakening part 215 may be a through hole. As shown in FIG. 4, the air in the battery accommodating space 11 may pass through the through hole to reach the pressure relief structure 22. Alternatively, the weakening part 215 may be a valve body, and when the pressure in the battery accommodating space 11 reaches a certain level, the valve body may be opened, and the air in the battery accommodating space 11 may pass through the valve body to reach the pressure relief structure 22. The weakening part 215 may be similar to an explosion-proof structure, such as an explosion-proof valve. When the pressure in the battery accommodating space 11 reaches a certain level, the pressure may break through the explosion-proof structure, and the air in the battery accommodating space 11 may pass through the explosion-proof structure to reach the pressure relief structure 22.

The pressure relief structure 22 is connected to the second plate 213, for example, a mounting through hole may be provided on the second plate 213, and the pressure relief structure 22 is connected to the second plate 213 to block the mounting through hole. A plurality of pressure relief structures 22 may be configured on the second plate 213.

The air in the battery accommodating space 11 may be directly collected into the air collecting groove 211. The first plate 212 may be provided with a through hole, and at least part of the explosion-proof valve of the battery may pass through the through hole and be located in the air collecting groove 211, so that after the pressure relief structure 22 releases the explosion-proof hole, the air inside the battery may directly enter the air collecting groove 211. Considering that the battery is located in the battery accommodating space 11, the air inside the battery directly entering the air collecting groove 211 may also be understood as that the air in the battery accommodating space 11 may be directly collected into the air collecting groove 211.

It should be noted that the first plate 212 may be provided with a through hole, and the through hole may be a through hole formed on an integral plate, or a through hole may be formed between two independent plates adjacent to each other, the disclosure is not limited thereto.

It should be noted that the air in the battery accommodating space 11 may be regarded as the air located outside the battery. For example, the air inside the battery is discharged from the battery and enters the outside of the battery, and the air may be collected into the exhaust space 12 through the pressure relief structure 22. Alternatively, the air in the battery accommodating space 11 may be regarded as the air inside the battery, and the air inside the battery may be directly collected into the exhaust space 12 through the pressure relief structure 22. In an embodiment, a circulating flow channel 214 is formed between the second plate 213 and the first plate 212, and the second plate 213 and the first plate 212 are connected through a second solder. The melting point of the second solder is greater than 300°C, so that the temperature in the battery container may break through the pressure relief structure 22 but will not damage the connection of the second plate 213 and the first plate 212. The second solder may be a 4-series solder.

The second plate 213 is soldered with the first plate 212, and the second plate 213 is soldered with the pressure relief structure 22. The circulating flow channel 214 may be a fluid-heat exchange channel, and the circulating flow channel 214 may also be an air-heat exchange channel, so as to be used for cooling or heating the battery inside the battery container.

In an embodiment, as shown in FIG. 1 and FIG. 2, there is a certain distance between the battery 1 and the partition structure 20. A heat conduction part 23 is provided between the battery and the partition structure 20, and the heat conduction part 23 exposes the explosion-proof valve of the battery, so that the partition structure 20 may perform heat dissipation or heating on the battery reliably.

The heat conduction part 23 may be an adhesive layer, which not only enables the partition structure 20 to perform heat dissipation or heating on the battery reliably, but also may be used to connect the partition structure 20 and the battery, so as to ensure the stability of the battery. The heat conduction part 23 may include an ultra-high temperature heat conduction adhesive, silicone heat conduction adhesive, epoxy resin AB adhesive, polyurethane adhesive, polyurethane heat-conduction and conductive adhesive, heat conduction silicone grease, and the like.

An embodiment of the present disclosure further provides a battery pack including the above battery container.

The battery pack in an embodiment of the present disclosure includes a battery container. The battery container includes a container body 10 and a partition structure 20. The partition structure 20 forms a battery accommodating space 11 and an exhaust space 12 in the container body 10. The partition structure 20 includes a mounting plate 21 and a pressure relief structure 22, and the air in the battery accommodating space 11 may be collected into the exhaust space 12 through the pressure relief structure 22 and discharged, so as to realize the pressure relief function for the battery container and avoid safety problems. Since the pressure relief structure 22 and the mounting plate 21 are independently formed structures, the configuration of the pressure relief structure 22 may be controlled, thereby reducing the risk of damage to the pressure relief structure 22, thus ensuring the pressure relief effect.

In an embodiment, the battery pack further includes a battery including a battery cell and an electrolyte, which are the smallest units capable of performing electrochemical reactions such as charging/discharging. The battery cell refers to a unit formed by winding or laminating a stack including a first electrode, a separator and a second electrode. When the first electrode is a positive electrode, the second electrode is a negative electrode. The polarities of the first electrode and the second electrode may be interchanged. The battery cell is arranged in a battery casing. The battery is arranged in the battery accommodating space 11. The mounting plate 21 may be used to support the battery.

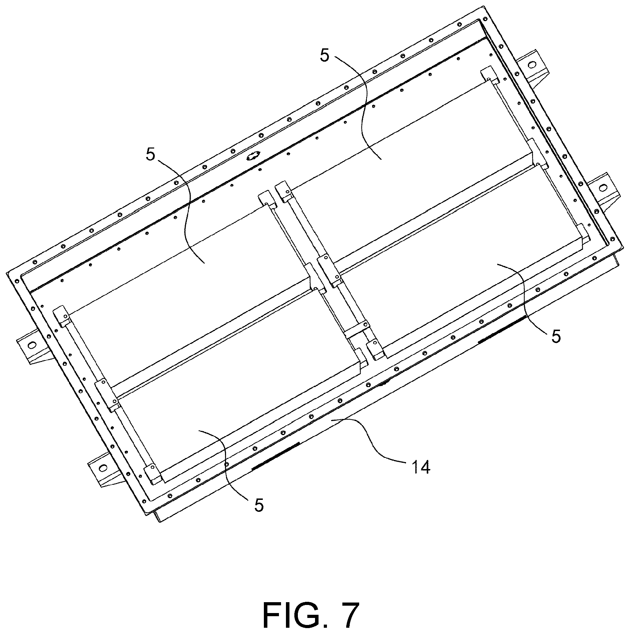

As shown in FIG. 7, a plurality of batteries may be formed into a battery module 5 and then arranged in the battery container, and the plurality of batteries may be fixed through an end plate and a lateral plate. Multiple batteries may be directly arranged in the battery container, that is, there is no need to group multiple batteries, and in this case, the end plate and the lateral plate may be removed.

An embodiment of the present disclosure further provides a battery structure, including a main body and a pressure relief structure. The main body is formed with a chamber, and the pressure relief structure is connected to the main body. The air in the chamber may enable at least part of the pressure relief structure to be detached from the main body from its connection with the main body, so as to allow the air to be discharged from the chamber.

The battery structure in an embodiment of the present disclosure includes a main body and a pressure relief structure, and the pressure relief structure is connected to the main body, so that the chamber formed by the main body may discharge air through the pressure relief structure. Because the air in the chamber enables at least part of the pressure relief structure to be detached from the main body from the connection between the pressure relief structure and the main body. That is, the pressure relief structure is not damaged; instead, the pressure relief structure is disabled from its connection with the main body, so that the air in the chamber may be discharged.

It should be noted that, since there is no need to damage the structure of the pressure relief structure itself, the structure of the pressure relief structure itself may not be designed with a thinned part and the like, so as to prevent external air and external liquid from corroding the pressure relief structure.

In an embodiment, the pressure relief structure may be detached from the main body at a preset temperature. The preset temperature is a, which satisfies 100°C≤a≤300°C, so that the air caused by thermal runaway is discharged from the disabled part.

In an embodiment, the pressure relief structure and the main body are connected through the first solder 216, that is, the pressure relief structure and the main body are soldered together, and the melting point of the first solder 216 may be 100°C to 300°C, so that the first solder 216 is damaged and disabled at 100°C to 300°C, so as to ensure reliable heat dissipation and pressure relief.

In an embodiment, the pressure relief structure includes a first metal piece, the main body includes a second metal piece, and the first metal piece is connected to the second metal piece. The first metal piece may be made of aluminum, copper and other materials, and the second metal piece may be made of aluminum, steel and other materials.

In some embodiments, the battery structure may be the battery container described above. For other structures of the battery structure, reference may be made to the above-mentioned battery container, and the disclosure provides no limitation thereto.

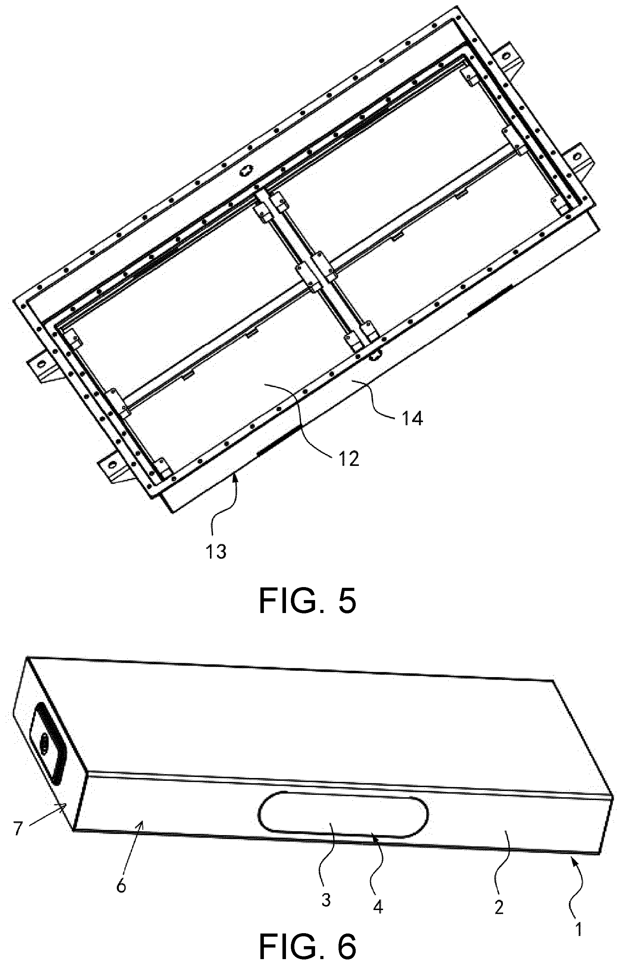

In some embodiments, as shown in FIG. 6, the battery structure may be a battery casing or a battery 1 (the battery 1 includes a battery casing 2), and the battery casing 2 may be provided with an explosion-proof hole 4 thereon. The pressure relief structure (such as an explosion-proof valve 3) is arranged on the battery casing 2 to block the explosion-proof hole 4. For the pressure relief structure in this embodiment, reference may be made to the pressure relief structure 22 described above, which will not be repeated here.

It should be noted that, as shown in FIG. 6, the battery casing 2 includes a casing member 6 and a cover plate 7, and the casing member 6 and the cover plate 7 are connected to seal the battery cell. The casing member 6 may be provided with an explosion-proof hole 4 thereon. Alternatively, the cover plate 7 may be provided with the explosion-proof hole 4 thereon.

An embodiment of the present disclosure further provides a battery structure, including a main body and a pressure relief structure. The main body is formed with a chamber, and the pressure relief structure is connected to the main body. At least a part of the pressure relief structure may be detached from the main body at a preset temperature. The preset temperature is a, which satisfies 100°C≤a≤300°C.

The battery structure in an embodiment of the present disclosure includes a main body and a pressure relief structure, and the pressure relief structure is connected to the main body, so that the chamber formed by the main body may discharge air through the pressure relief structure. Since the air in the chamber enables at least part of the pressure relief structure to be detached from the main body at a preset temperature, the preset temperature is a, and 100°C≤a≤300°C, so that the air caused by thermal runaway may be discharged from the disabled part in time, thus avoiding failure to timely release the pressure.

It should be noted that at least a part of the pressure relief structure may be detached from the main body at a preset temperature. Under the circumstances, the connection between the pressure relief structure and the main body may be disabled at the preset temperature a, so that the air is discharged in the early stage of thermal runaway, thus improving the safety performance of the battery pack. Alternatively, the pressure relief structure may include a first part and a second part, the first part and the second part are connected, and the connection between the first part and the second part may be disabled at the preset temperature a.

In an embodiment, the pressure relief structure and the main body are connected through the first solder 216, that is, the pressure relief structure and the main body are soldered together, and the melting point of the first solder 216 may be 100°C to 300°C, so that the first solder 216 may be damaged and disabled at 100°C to 300°C, so as to ensure reliable heat dissipation and pressure relief.

In an embodiment, the pressure relief structure includes a first metal piece, the main body includes a second metal piece, and the first metal piece is connected to the second metal piece. The first metal piece may be made of aluminum, copper and other materials, and the second metal piece may be made of aluminum, steel and other materials.

In some embodiments, the battery structure may be the battery container described above. For other structures of the battery structure, reference may be made to the above-mentioned battery container, and the disclosure provides no limitation thereto.

In some embodiments, as shown in FIG. 6, the battery structure may be a battery casing or a battery 1 (the battery 1 includes a battery casing 2), and the battery casing 2 may be provided with an explosion-proof hole 4 thereon. The pressure relief structure (such as an explosion-proof valve 3) is arranged on the battery casing 2 to block the explosion-proof hole 4. For the pressure relief structure in this embodiment, reference may be made to the pressure relief structure 22 described above, which will not be repeated here.

It should be noted that the pressure relief structure 22 may be detached from the mounting plate 21, or the pressure relief structure may be detached from the main body, which may be regarded as that the pressure relief structure 22 is at least partially detached, that is, a part of the pressure relief structure 22 is detached, or the pressure relief structure 22 is completely detached. For example, when the pressure relief structure 22 is broken through from the middle part, under the circumstances, the pressure relief structure 22 also releases the air therein, which may also be regarded that the pressure relief structure 22 is detached from the mounting plate or the main body. For example, the first solder 216 or the adhesive between the pressure relief structure 22 and the mounting plate 21 is disabled. Under the circumstances, although the pressure relief structure 22 and the mounting plate 21 are still connected, the pressure relief structure 22 may release the air therein, it may still be regarded that the pressure relief structure 22 is detached from the mounting plate 21. Therefore, the detachment of the pressure relief structure 22 mentioned in the above embodiment emphasizes that the air may be released through the pressure relief structure 22, and it is not limited that the pressure relief structure 22 must be detached from the mounting plate 21 or the main body.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery container, comprising a container body (10) and a partition structure (20), wherein the partition structure (20) is arranged in the container body (10) to form a battery accommodating space (11) and an exhaust space (12), and the partition structure (20) comprises:
a mounting plate (21); and
a pressure relief structure (22), wherein the pressure relief structure (22) and the mounting plate (21) are independently formed structures, and the pressure relief structure (22) is arranged on the mounting plate (21),
wherein air in the battery accommodating space (11) is able to be collected into the exhaust space (12) through the pressure relief structure (22) and discharged.

2. The battery container according to claim 1, wherein the air in the battery accommodating space (11) allows at least a part of the pressure relief structure (22) to detach from the mounting plate (21) from a connection between the pressure relief structure (22) and the mounting plate (21), such that the air is collected into the exhaust space (12) and discharged.

3. The battery container according to claim 1 or 2, wherein the pressure relief structure is detached from the mounting plate (21) at a preset temperature;
wherein the preset temperature is a, and 100°C≤a≤300°C.

4. The battery container according to claim 3, wherein the pressure relief structure (22) and the mounting plate (21) are connected through a first solder (216).

5. The battery container according to claim 3, wherein the pressure relief structure (22) is adhered to the mounting plate (21).

6. The battery container according to claim 4 or5, wherein the pressure relief structure (22) is located on a side of the mounting plate (21) adjacent to the battery accommodating space (11).

7. The battery container according to claim 4 or 5, wherein the pressure relief structure (22) is located on a side of the mounting plate (21) adjacent to the exhaust space (12).

8. The battery container according to claim 1 or 2, wherein the mounting plate (21) and the pressure relief structure (22) are formed with an air collecting groove (211);
the air in the battery accommodating space (11) is able to be collected into the exhaust space (12) through the air collecting groove (211) and discharged.

9. The battery container according to claim 8, wherein the pressure relief structure (22) forms at least a part of a bottom wall (2111) of the air collecting groove (211).

10. The battery container according to claim 8, wherein the mounting plate (21) comprises:
a first plate (212);
a second plate (213), wherein the second plate (213) and the first plate (212) are arranged opposite to each other, and the pressure relief structure (22) is arranged on the second plate (213);
wherein the second plate (213) and the pressure relief structure (22) form the air collecting groove (211), and the air in the battery accommodating space (11) is able to be collected into the air collecting groove (211).

11. The battery container according to claim 10, wherein a circulating flow channel (214) is formed between the second plate (213) and the first plate (212), and the second plate (213) and the first plate (212) are connected through a second solder;
wherein a melting point of the second solder is greater than 300°C.

12. The battery container according to claim 1 or 2, wherein the battery accommodating space (11) and the exhaust space (12) are stacked in an up-down direction.

13. A battery pack, comprising the battery container as claimed in any one of claims 1-12.
